# EUROPÄISCHE PATENTANMELDUNG

(11) **EP 0 840 426 A1**
(43) Veröffentlichungstag der Anmeldung: **06.05.1998**
(21) Anmeldenummer: 97810753.0
(22) Anmeldetag: 08.10.1997
(51) Int. Cl.: H02K 9/12

(54) **Gasgekühlte elektrische Maschine**

(30) Priorität: 02.11.1996 DE 19645272
(71) Anmelder: Asea Brown Boveri AG, 5401 Baden (CH)
(72) Erfinder: Zimmermann, Hans, 8617 Mönchaltorf (CH)
(74) Vertreter: Weibel, Beat

(57) **Zusammenfassung**

Bei einer luftgekühlten elektrischen Maschine mit Reverse-Kühlung im geschlossenen Kühlkreislauf ist eine Kühlanordnung in einer Fundamentgrube (10) unterhalb der Maschine angeordnet und modular aufgebaut. Sie besteht aus einer Mehrzahl von Kühlern (11), die unabhängig voneinander in der Fundamentgrube (10) angeordnet, und durch senkrecht zur Maschinenlängsrichtung verlaufende Trennwände voneinander separiert sind. Die Austrittsöffnungen der Kühler (11) stehen mit Kaltgaskammern (14, 16) zwischen Maschinengehäuse (1) und Statorblechkörper (2) in freier Verbindung. Die Eintrittsöffnungen der Kühler (11) stehen mit den Ausströmräumen der beiden Ventilatoren (12) an den Maschinenstirnseiten in freier Verbindung. Diese Bauweise ermöglicht neben einer optimalen Kühlgasführung einen schnellen Austausch und/oder Abschaltung eines Kühlers.

## Beschreibung

### TECHNISCHES GEBIET

Die Erfindung betrifft eine gasgekühlte elektrische Maschine, wie sie im Oberbegriff des ersten Anspruchs beschrieben ist.

Eine gasgekühlte elektrische Maschine mit diesen Merkmalen ist beispielsweise aus der DE-43 32 304 A1 bekannt.

### TECHNOLOGISCHER HINTERGRUND UND STAND DER TECHNIK

Prinzip der sogenannten indirekten Kühlung ist es, die in den Statorwicklungsstäben entstehenden Verluste an das gasförmige Kühlmedium (Wasserstoff oder Luft) abzugeben. Der hauptsächliche Wärmefluss findet dabei vom Stabkupfer über die Isolation in den Zahnbereich des Statorblechkörpers statt. Von den Statorzähnen wird die Wärme an das Kühlmedium abgegeben.

Die Grenzen der Aufwärmung sind dabei durch die Temperaturempfindlichkeit der Isolation und darüber hinaus durch entsprechende Maximaltemperaturen vorgegeben, welche in Normen durch verschiedene Isolationsklassen festgelegt sind (ANSI, IEC).

Infolge der relativ grossen Temperaturdifferenz zwischen dem in die Isolation eingebetteten Statorkupferleitern und der Aussenschicht der Isolation ist die maximale Leistung eines indirekt gasgekühlten Turbogenerators mit klassischem Kühlprinzip begrenzt.

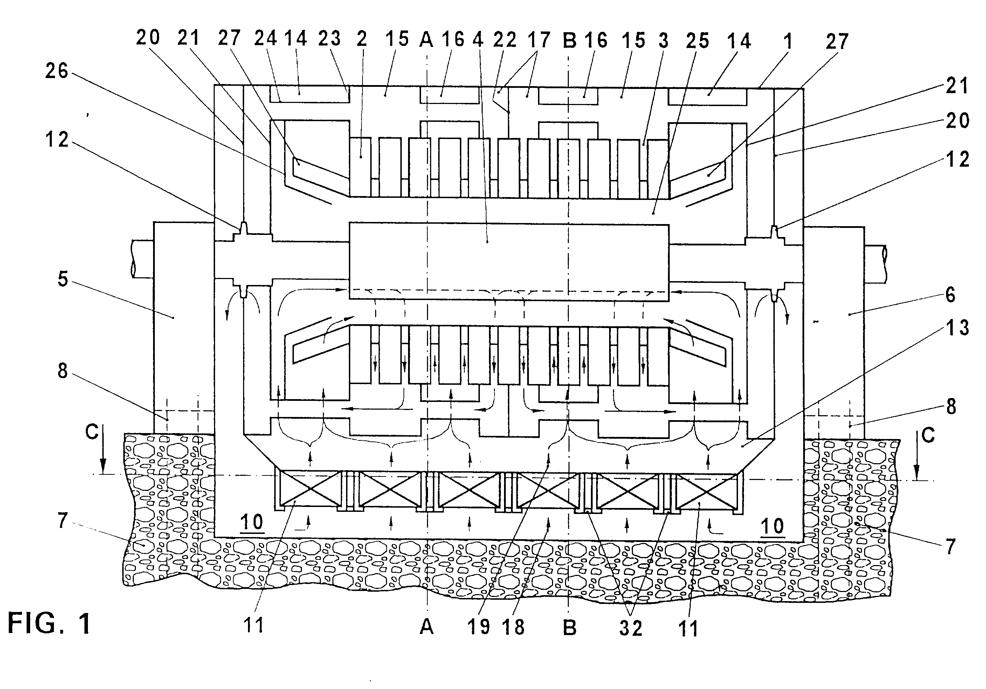

Es hat daher nicht an Vorschlägen gefehlt, die Kühlung zu verbessern, wobei sich diese Bemühungen zum einen auf die Intensivierung der Kühlung im mittigen Maschinenbereich zum anderen auf eine grundsätzliche Umgestaltung des Kühlkreislaufes konzentrieren, nämlich den Übergang von der konventionellen Druckkühlung zur Saugkühlung (engl. "reverse flow cooling"), wie es beispielsweise in dem CIGRE-Bericht "Development of Large Air Cooled Generators for Gas Turbines and Combined Cycles", insbesondere Fig.1 auf Seite 11-201, 1992 Session 30. August - 5. September 1992, beschrieben ist.

Generell bietet die Saugkühlung gegenüber der Druckkühlung den Vorteil, dass die die Kühler verlassende Luft unmittelbar den Kühlschlitzen im Stator zugeführt werden kann und die durch den Maschinenventilator verursachte Temperaturerhöhung eliminiert ist. Als nachteilig könnte angesehen werden, dass die Kühlgasführung in der Maschine insgesamt komplizierter wird, weil insbesondere im Wickelkopfraum zusätzliche Einbauten vorgesehen werden müssen und auch die Versorgung des Rotors mit Kühlgas schwieriger wird.

Ein weiteres Problem ist die Anordnung der Kühler bei Maschinen mit höheren Einheitsleistungen. Die Unterbringung der Kühler im Gehäuse ist ohne Erhöhung des Gehäusedurchmessers kaum möglich.

### DARSTELLUNG DER ERFINDUNG

Aufgabe der Erfindung ist es, eine gasgekühlte elektrische Maschine der eingangs genannten Gattung zu schaffen, die vorzugsweise mit Saugkühlung arbeitet und optimal gekühlt werden kann.

Erfindungsgemäss wird diese Aufgabe durch die Merkmale des ersten Anspruchs gelöst.

Die Vorteile der Erfindung sind unter anderem darin zu sehen, dass die Kühlanordnung modular aufgebaut ist und aus einer Mehrzahl von Kühlern besteht, die unabhängig voneinander in der Fundamentgrube angeordnet sind, dass die Austrittsöffnungen der Kühler mit den besagten Kaltgaskammern in freier Verbindung stehen und die Eintrittsöffnungen der Kühler mit dem Ausströmraum der beiden Ventilatoren in freier Verbindung stehen.

Die Unterbringung der Kühler in der Fundamentgrube ermöglicht es, den gesamten Raum unter dem Aktivteil und unter den beiden Wickelköpfen auszunutzen, ohne das Transportprofil der Maschine zu erhöhen, was insbesondere bei Bahntransporten von ausschlaggebender Bedeutung ist. Auf diese Weise lässt sich die Kühlerfläche um 50% und mehr erhöhen.

Bei einer besonders bevorzugten Ausführungsform der Erfindung ist vorgesehen, dass in einer Seitenwand 28 der Fundamentgrube erste Ausnehmungen vorgesehen sind, dass die Kühler in Richtung senkrecht zur Längsachse der Maschine verschiebbar angeordnet und schubladenartig in einer ersten Richtung durch die besagte Ausnehmungen nach einer Seite auszieh- bzw. entfernbar sind, und dass die Anschlussarmaturen der Kühler auf der der Ausziehseite gegenüberliegende Seite angeordnet sind und durch zweite Ausnehmungen in der gegenüberliegenden Seitenwand 28 zugänglich sind. Diese Bauweise ermöglicht einen schnellen Austausch einzelner Kühler im Falle periodischer Revisionen oder eines Defekts.

Bildet man die Konstruktion so aus, dass die Austrittsöffnungen der Kühler von den Kaltgaskammern distanziert sind, entsteht ein Ausgleichraum zwischen Kühlern und der Maschine, der sich axial über die gesamte Länge der Maschine erstreckt. Dieser Raum ist insbesondere dann von Vorteil, wenn ein Kühler ausgefallen ist. Durch Abdecken der Austrittsöffnung des ausgefallenen Kühlers, z.B. mit einer plattenförmigen Abdeckung, kann verhindert werden, dass heisses Kühlgas in die Kaltgaskammern gelangt. Mit den restlichen (intakten) Kühlern in Verbindung mit dem axialen Ausgleichraum kann dann die Maschine bei verminderter Leistung weiterbetrieben werden.

Die Erfindung eignet sich insbesondere für Gas- und Kombianlagen, bei welchen die thermische(n) Maschine(n) auf einem Plattenfundament aufgestellt ist bzw. sind. Bei solchen Anlagen ist das Fundamentniveau des Turbogenerators um 1000 und mehr Millimeter höher als das Fundamentniveau der thermischen Maschine(n). Wird hier das Gehäuse der Maschine unter Zwischenschaltung eines Fundamentes auf dem eigentlichen Plattenfundament einer thermischen Maschine befestigt, dient das Innere des Fundamentes als Fundamentgrube. Das seitliche Ausfahren der Kühler zu Montage-, Inspektions- und Reparaturzwecken gestaltet sich dann sehr einfach, weil grösstmögliche Zugänglichkeit gewährleistet ist.

### KURZE BESCHREIBUNG DER ZEICHNUNG

Die Erfindung wird nachstehend anhand eines Ausführungsbeispiels näher erläutert. In der Zeichnung zeigt
- Fig. 1: einen vereinfachten Längsschnitt durch einen luftgekühlten Turbogenerators mit geschlossenem Kühlkreislauf und mit in der Fundamentgrube angeordneten Kühlern;
- Fig. 2: einen ersten Querschnitt durch den Turbogenerator nach Fig. 1 auf der Höhe zwischen zwei Kühlern längs der Linie AA;
- Fig. 3: einen zweiten Querschnitt durch den Turbogenerator nach Fig. 1 auf der Höhe eines Kühlers längs der Linie BB;
- Fig. 4: einen Horizontalschnitt durch den Turbogenerator nach Fig. 1 unterhalb des Statorblechkörpers längs der Linie CC;
- Fig. 5: stark vereinfachter Längsschnitt durch eine Maschinengruppe, bestehend aus einer thermischen und einer elektrischen Maschine.

Es sind nur die für das Verständnis der Erfindung wesentlichen Elemente gezeigt.

### WEG ZUR AUSFÜHRUNG DER ERFINDUNG

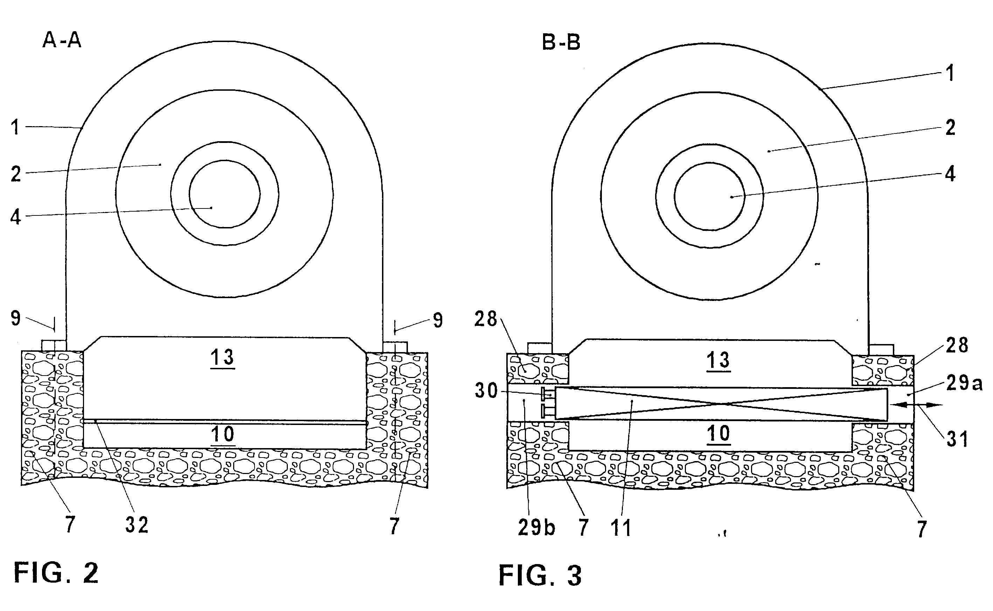

Der in Fig. 1 dargestellte luftgekühlte Turbogenerator weist ein Maschinengehäuse 1 auf, das einen aus Teilblechkörpern 2 bestehenden Statorblechkörper einschliesst. Im Statorblechkörper sind radiale Belüftungsschlitze 3 zwischen den einzelnen Teilblechkörpern 2 vorgesehen. Ein Rotor 4 ist in Bocklagern 5, 6 gelagert, die auf dem Fundament 7 mittels Zugankern 8 befestigt sind. Das Maschinengehäuse 1 ist gleichfalls mit Zugankern 9 auf dem Fundament 7 befestigt (vgl. Fig. 2 und 3).

Das Fundament 7 weist eine Fundamentgrube 10 auf, die sich axial über die gesamte Länge des Maschinengehäuses 1 erstreckt und nahezu die gesamte Breite des Gehäuses 1 einnimmt. In dieser Fundamentgrube 10 ist eine Kühlanordnung der Maschine angeordnet. Sie ist modular aufgebaut und besteht aus im Beispielsfall sechs unter sich gleichartigen Kühlern 11. Sie sind unabhängig voneinander in der Fundamentgrube angeordnet. Dabei stehen die Eintrittsöffnungen der Kühler 11 mit Ausströmräumen von beiderseits des Rotors 4 angeordneten Ventilatoren 12 in Verbindung und die Austrittsöffnungen der Kühler 11 münden in einen Ausgleichsraum 13. Das die Kühler 11 durchströmende Kühlgas ist mittels Pfeilen dargestellt, wobei einströmendes Heissgas mit 18 und ausströmendes Kaltgas mit 19 bezeichnet ist. Alle weiteren nicht näher bezeichneten Pfeile zeigen den Kühlkreislauf des Kühlgases auf. Der Kühlkreislauf ist lediglich in einer Maschinenhälfte durch Pfeile kenntlich gemacht, da hinsichtlich der Kühlung die Maschine symmetrisch aufgebaut ist.

Bei dem Kühlprinzip handelt es sich um eine sogenannte Revers- oder Saugkühlung, bei der Heissgas 18 mittels Ventilatoren 12 den Kühlern 11 zugeführt wird. Aus den Kühlern 11 strömt dann Kaltgas 19 durch den Ausgleichsraum 13 in den Maschinenrücken, also den Raum zwischen Maschinengehäuse 1 und dem aus Teilblechkörpern 2 aufgebauten Statorblechkörper. Im Gehäuserücken sind durch Gehäusespanten 22 und radiale und axiale Trennwände 23, 24 Heiss- und Kaltgaskammern 15, 17, 14 und 16 gebildet. Im Beispielsfall je eine Kaltgaskammer 14 an beiden Maschinenenden und eine Heissgaskammer 17 in Maschinenmitte, sowie beiderseits der vertikalen Maschinenmitte je eine Heissgaskammer 15 und eine Kaltgaskammer 16 zwischen den Kammern 14 und 17.

Der Kühlgasstrom verteilt sich im Ausgleichsraum 13 auf die Kaltgaskammern 14 und 16, wobei sich Teilströmungen ausbilden. Ein erster Teilstrom strömt zwischen Leitblechen 26 und einer Innenverschalung 21 direkt zum Rotor 4, ein zweiter strömt durch den Wickelkopf 27 in den Maschinenluftspalt 25, und ein dritter Kühlgasstrom gelangt durch die Kaltgaskammern 16 und Belüftungsschlitze 3 in den Luftspalt 25. Aus letzterem wird der Kühlgasstrom von den Ventilatoren 12 durch Belüftungsschlitze 3 und die Heissgaskammern 15 und 17 zwischen die Innenverschalung 21 und eine Aussenverschalung 20 gesaugt und anschliessend zu den Kühlern 11 in der Fundamentgrube 10 gepresst.

Fig. 2 zeigt die Anordnung der Maschine auf ihrem Fundament 7 in einem Querschnitt nach der Linie AA in Fig. 1. Mit 32 sind hier Führungsschienen bezeichnet, auf denen die Kühler aufliegen.
Fig. 3 zeigt die in Ausnehmungen 29a, 29b der Seitenwände 28 des Fundamentes 7 angeorneten Kühler 11. Die Ausnehmungen 29a, 29b weisen die gleiche Querschnittsform der Kühler 11 auf, wobei letzterer senkrecht zur Maschinenachse in diesen Ausnehmungen gehalten wird. Der Kühler 11 ist schubladenartig derart durch die erste Ausnehmung 29a auf der Ausziehseite in Richtung der Verschieberichtung 31 in den Raum unter dem Maschinengehäuse 1 eingeschoben, dass die an ihm angeordneten Anschlussarmaturen 30 in die zweite Ausnehmung 29b hineinragen. Hier ist der Kühler 11 mit weiteren Einrichtungen eines Kühlsystems verbunden, auf deren Darstellung verzichtet wurde.
Die Kühler 11 und die Führungsschienen 32 teilen den Raum unter dem Maschinengehäuse 1 in den Ausgleichsraum 13 und die Fundamentgrube 10 (vgl. Fig. 2 und Fig. 3). Diese Ausführung ist insbesondere dann von Vorteil, wenn ein Kühler ausgefallen ist. Durch Abdecken der Austrittsöffnung des ausgefallenen Kühlers, z.B. mit einer plattenförmigen Abdeckung, kann verhindert werden, dass heisses Kühlgas in die Kaltgaskammern gelangt. Mit den restlichen (intakten) Kühlern in Verbindung mit dem axialen Ausgleichraum 13 kann dann die Maschine bei verminderter Leistung weiterbetrieben werden.

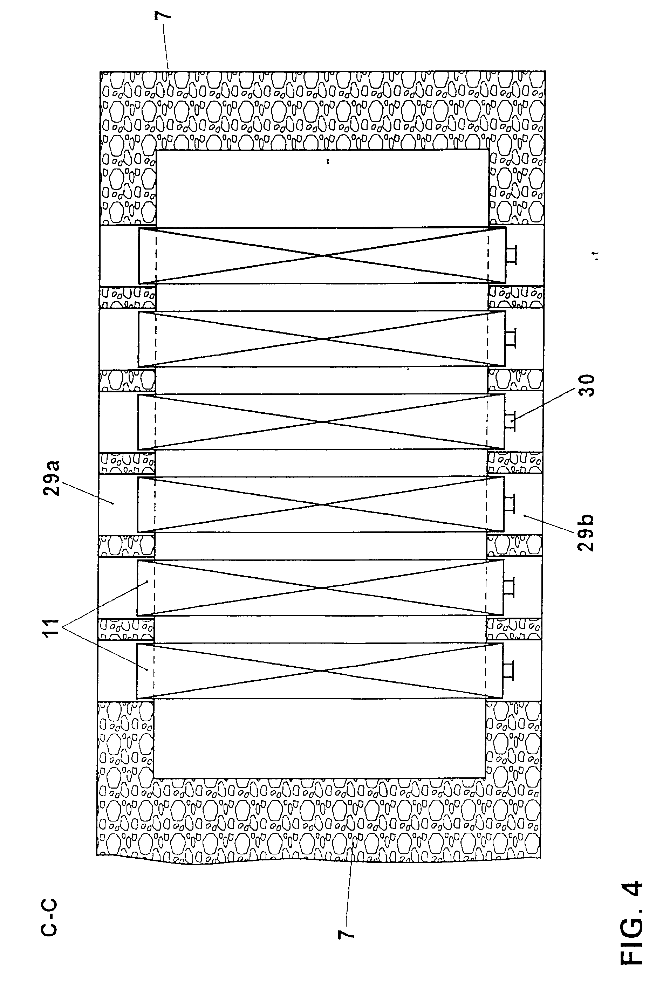

In Fig. 4 sind die Kühler 11 im Längsschnitt durch das Fundament 7 dargestellt. Wie auch Fig. 1 entnehmbar ist, wird mit der Unterbringung der Kühler 11 in der Fundamentgrube der gesamte Raum unter dem Aktivteil der Maschine, also dem Teil der Maschine zwischen den Wickelköpfen 27, einschliesslich derselben, für die Kühleinrichtung ausgenutzt. Hierbei vergrössert sich das Transportprofil der Maschine nicht, was insbesondere für Bahntransporte von ausschlaggebender Bedeutung ist. Auf diese Weise lässt sich die Kühlerfläche um 50% und mehr im Vergleich zum bekannten Stand der Technik erhöhen.

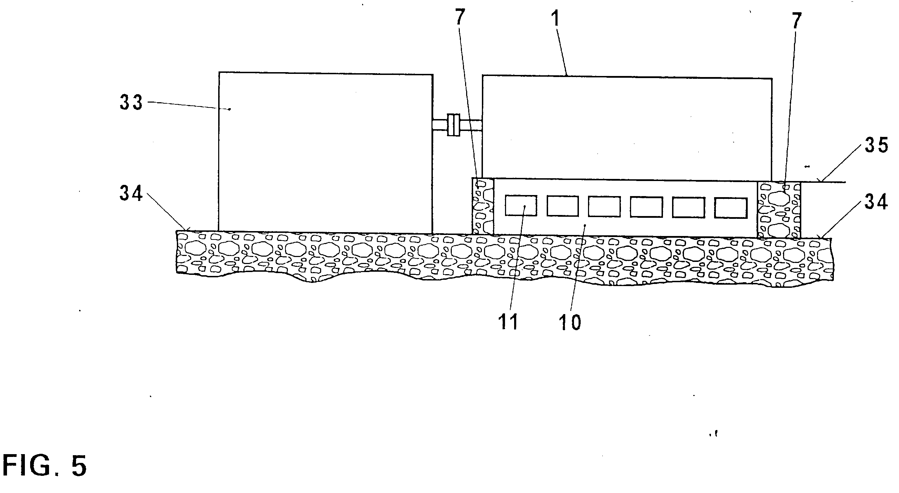

Die Erfindung eignet sich insbesondere für Gas- und Kombianlagen, bei welchen die thermische(n) Maschine(n) 33, Fig. 5, auf einem Plattenfundament 34 aufgestellt ist bzw. sind. Bei solchen Anlagen ist das Fundamentniveau 35 des Turbogenerators um 1000 und mehr Millimeter höher als das Plattenfundamentniveau der thermischen Maschine(n) 33. Wird hier das Gehäuse 1 der Maschine unter Zwischenschaltung eines Fundamentes 7 auf dem Plattenfundament 34 befestigt, dient das Innere des Fundamentes 7 als Fundamentgrube 10. Das seitliche Ausfahren der Kühler 11 zu Montage-, Inspektions- und Reparaturzwecken gestaltet sich dann sehr einfach, weil grösstmögliche Zugänglichkeit gewährleistet ist.

Die Erfindung wurde im vorstehenden anhand einer gasgekühlten Maschine mit drei Heissgaskammern und vier Kaltgaskammern erläutert, wobei letztere aus sechs Kühlern mit Kühlgas gespeist werden. Selbstverständlich kann die Erfindung auch bei Maschinen mit einer anderen Anzahl Heissgaskammern, Kaltgaskammern und Kühlern realisiert werden. Gegebenenfalls müsste dann lediglich ein geänderte Strömungsführung des Kühlgases mittels Gehäusespanten und radialen und axialen Trennwänden im Maschinenrücken erfolgen.

### BEZUGSZEICHENLISTE

- 1: Maschinengehäuse
- 2: Teilblechkörper
- 3: Belüftungsschlitze
- 4: Rotor
- 5, 6: Bocklager
- 7: Fundament
- 8, 9: Zuganker
- 10: Fundamentgrube
- 11: Kühler
- 12: Ventilator
- 13: Ausgleichsraum
- 14, 16: Kaltgaskammer
- 15, 17: Heissgaskammer
- 18: Heissluft vor 11
- 19: Kaltluft nach 11
- 20: Aussenverschalung
- 21: Innenverschalung
- 22: Gehäusespanten
- 23: radiale Trennwand
- 24: axiale Trennwand
- 25: Luftspalt
- 26: Leitbleche
- 27: Wickelkopf
- 28: Seitenwand
- 29a, b: Ausnehmungen
- 30: Anschlussarmaturen
- 31: Verschieberichtung
- 32: Führungsschienen
- 33: thermische Maschine
- 34: Plattenfundament
- 35: Fundamentniveau

## Patentansprüche

1. Elektrische Maschine mit einem über einer Fundamentgrube (10) angeordneten und auf einem Fundament (7) befestigten Gehäuse (1), einem in diesem Gehäuse (1) angeordnetem Stator mit in Nuten am Innenumfang angeordnetem indirekt gekühlten Statorwicklungsleitern und einem Rotor (4), wobei der Blechkörper des Stators aus einzelnen, durch Distanzstege voneinander beabstandeten Teilblechpaketen (2) aufgebaut ist und die Zwischenräume zwischen zwei aufeinanderfolgenden Teilblechpaketen (2) radial verlaufende Kühlschlitze (3) bilden, und die Kühlschlitze (3) ringförmige Luftspalträume am Innenumfang des Statorblechpakets mit Kammerräumen verbinden, die zwischen dem Aussenumfang des Statorblechkörpers und dem Gehäuse gelegen sind, welche Kammerräume Kaltgaskammern (14, 16) umfassen, die von kaltem Kühlgas beaufschlagt sind, und welche Kammerräume Heissgaskammern (15, 17) umfassen, in welche erwärmtes Kühlgas aus den besagten Kühlschlitzen (3) radial auswärts gerichtet einströmt, welche Heissgaskammern (15, 17) mit einer Kühlanordnung in der Fundamentgrube (10) unterhalb der Maschine in Verbindung stehen, und wobei Ventilatoren (12) und Kühlgasleiteinrichtungen an beiden Maschinenenden vorgesehen sind, welche das aufgewärmte Kühlgas aus den Heissgaskammern (15, 17) absaugen und das gekühlte Gas als Kaltgas den besagten Kaltgaskammern (14, 16), dem Wickelkopfraum und dem Rotor (4) zuleiten,
dadurch gekennzeichnet,
dass die Kühlanordnung modular aufgebaut ist und aus einer Mehrzahl von Kühlern (11) besteht, die unabhängig voneinander in der Fundamentgrube (10) angeordnet sind, und
dass die Austrittsöffnungen der Kühler mit den besagten Kaltgaskammern (14, 16) in freier Verbindung stehen und die Eintrittsöffnungen der Kühler (11) mit einem Ausströmraum der beiden Ventilatoren (12) in freier Verbindung stehen.

2. Maschine nach Anspruch 1,
dadurch gekennzeichnet,
dass die Austrittsöffnungen der Kühler (11) von den Kaltgaskammern (14, 16) distanziert sind, wobei der so geschaffene Raum als Ausgleichsraum (13) dient.

3. Maschine nach Anspruch 1 oder 2,
dadurch gekennzeichnet,
dass in einer Seitenwand (28) der Fundamentgrube (10) erste Ausnehmungen (29a) vorgesehen sind,
dass die Kühler (11) in Richtung senkrecht zur Längsachse der Maschine verschiebbar angeordnet und schubladenartig in einer Richtung (31) durch die ersten Ausnehmungen (29a) nach einer Seite auszieh- bzw. entfernbar sind, und
dass Anschlussarmaturen (30) der Kühler (11) auf der der Ausziehseite gegenüberliegende Seite angeordnet sind und durch zweite Ausnehmungen (29b) in der gegenüberliegenden Seitenwand (28) der Fundamentgrube (10) zugänglich sind.

4. Maschine nach Anspruch 3 oder 4,
dadurch gekennzeichnet,
dass das Gehäuse (1) der Maschine auf einem Fundament (7) befestigt ist, wobei das Innere des Fundamentes (7) eine Fundamentgrube (10) bildet.

5. Maschine nach einem der vorangegangenen Ansprüche,
dadurch gekennzeichnet,
dass die Austrittsöffnungen einzelner Kühler (11) zwecks deren Stillegung durch plattenförmige Elemente individuell verschliessbar sind.
